# EUROPEAN PATENT APPLICATION

(11) **EP 4 696 601 A1**
(43) Date of publication of application: **18.02.2026**
(21) Application number: 25193697.7
(22) Date of filing: 04.08.2025
(51) Int. Cl.: B64C 3/28, B64F 5/10, F16B 5/02

(54) **JOINT ASSEMBLY**

(30) Priority: 16.08.2024 GB 202412116
(71) Applicant: Airbus Operations Limited, Bristol BS34 7PA (GB)
(72) Inventor: EVANS, Connor, Bristol (GB); BATE, Christopher Alan, Bristol (GB)
(74) Representative: Worthington, Richard Easton

(57) **Abstract**

A joint assembly (100) for joining a first aircraft structural component (22) to a second aircraft structural component (21). The joint assembly has a double eccentric bush (101) for mounting to one of the first and second aircraft structural components, and a spigot (102) mounted on the double eccentric bush. Rotating elements (111,112) of the double eccentric bush enable adjustment of the spigot relative to the respective aircraft structural component in two orthogonal directions normal to a longitudinal axis of the spigot prior to joining the first aircraft structural component to the second aircraft structural component. A spigot receptacle (103) is provided for mounting to, or is integrally formed with, the other of the first and second aircraft structural components. The spigot receptacle is arranged to receive the spigot. At least one fastener (130) joins the first and second aircraft structural components together when the spigot is received in the spigot receptacle.

## Description

### FIELD OF THE INVENTION

The present invention relates to a joint assembly for joining a first aircraft structural component to a second aircraft structural component, an aircraft structure including the joint assembly, an aircraft comprising the aircraft structure, and to a method of joining a first aircraft structural component to a second aircraft structural component.

### BACKGROUND OF THE INVENTION

Airfoil structures that are found in a variety of aircraft, spacecraft and wind turbine applications typically comprise a torsion box structure, which includes one or more longitudinal spars, a plurality of transverse ribs, and is enclosed by structural covers. A fixed leading edge (FLE) structure and/or a fixed trailing edge (FTE) structure may be attached to such a torsion box structure to form an airfoil shape.

The overall shape of the airfoil structure must conform to a predefined shape, in order to provide desired aerodynamic properties. Any misalignment of various members may result in a shape deviation, which when operated in an aerodynamic flow might result in unintended performance and handling qualities of the airfoil structure.

Therefore, the exact final position of the various members relative to one another in the assembled airfoil structure (i.e. when fixed in an operational configuration) is of critical importance throughout the assembly process. Variations in the dimensions of the components of the airfoil structure from an engineering ideal (normally governed by manufacturing drawings) must be controlled within pre-determined angular and linear dimension limits (commonly referred to as engineering tolerances).

Notably, airfoil structures in particular are often manufactured to exceptionally small engineering tolerances and hence can take a lot of time to assemble (which adversely effects production throughput).

Increasing production throughput is a common goal throughout the aircraft manufacturing industry to help meet the growing global demand for aircraft, which necessitates faster aircraft delivery times.

As such, it is an aim of the present invention to provide a solution to this problem.

### SUMMARY OF THE INVENTION

A first aspect of the invention provides a joint assembly for joining a first aircraft structural component to a second aircraft structural component, the joint assembly comprising: a double eccentric bush for mounting to one of the first and second aircraft structural components; a spigot mounted on the double eccentric bush, wherein rotating elements of the double eccentric bush enable adjustment of the spigot relative to the respective aircraft structural component in two orthogonal directions normal to a longitudinal axis of the spigot prior to joining the first aircraft structural component to the second aircraft structural component; a spigot receptacle for mounting to, or integrally formed with, the other of the first and second aircraft structural components, wherein the spigot receptacle is arranged to receive the spigot; and at least one fastener for joining the first and second aircraft structural components together when the spigot is received in the spigot receptacle.

Advantageously, the joint assembly enables quick, adjustable and robust attachment of the first aircraft structural component to the second aircraft structural component. The joint assembly enables precise control of steps and gaps around outer surfaces of the first and second aircraft structural components, whilst also allowing rapid attachment speed, e.g. on an assembly line. Steps and gaps are of particularly high importance when dealing with aircraft structural components that form the outer aerodynamic surface of an aircraft structure, as these can significantly impact on aerodynamic performance. Typically, precision is inversely proportional to industrial speed but this invention aims to provide both speed and precision.

While the spigot can react moments, the fastener(s) can be arranged to react loads in a direction along the fastener axis. The double eccentric bush is adjustable to ensure correct alignment of the first and second aircraft structural components, and the double eccentric bush can then be locked in position once adjusted by installation of the fastener(s) or by another locking mechanism.

Preferably, one of the first and second aircraft structural components is designated as a datum or fixed part, and the other of the first and second aircraft structural components is designated as an adjustable part, whose position may be adjusted relative to the fixed part during joining.

For example, the first and second aircraft structural components may be aircraft wing components, preferably a fixed wing part and either a leading edge or trailing edge wing part. The fixed part may be the first aircraft structural component, and the adjustable part may be the second aircraft structural component.

The spigot may have a flange for bearing against the respective aircraft structural component, and a spigot projection extending from one side of the flange for engaging with the spigot receptacle.

Preferably, the spigot may be on the adjustable part, and the spigot receptacle may be on the fixed part.

The spigot may further have a spigot root extending from the other side of the flange and may be received in the double eccentric bush.

The spigot root may be received in an internal bore of the double eccentric bush.

The rotating elements of the double eccentric bush may comprise a first eccentric bush part having a first outer diameter and a first eccentric internal bore relative to the first outer diameter, and a second eccentric bush part having a second outer diameter and a second eccentric internal bore relative to the second outer diameter, wherein the second eccentric bush part is rotatably received in the first eccentric bush part, and the first eccentric bush part is rotatably received in the respective aircraft structural component. The second eccentric bush part may sit inside the first eccentric bush part. The first and second eccentric bush parts may be rotatable about their respective longitudinal axes in one or both directions. The degree of permitted angular rotation of the first and second eccentric bush parts may be limited to provide only sufficient adjustment for the tolerance requirements of the joint assembly. Preferably, the eccentric bush is as small as possible.

The first and second eccentric bush parts may have nested flanges. The nested flanges may have a co-planar flange surface.

The first and second eccentric bush parts may each have conical interfacing surfaces. The outer diameter of the first eccentric bush part may be cylindrical. The outer diameter of the second eccentric bush part may be conical.

The first and second eccentric bush parts may be secured to prevent relative rotation by a locking washer or other locking mechanism when the first and second aircraft structural components are joined by the fastener. The locking mechanism may be frictional engagement between the first and second eccentric bush parts and between the first eccentric bush part and the respective aircraft structural component when clamped up by installation of the fastener.

The two bush parts may have the same length (in the longitudinal direction of the spigot).

The spigot may have a conical outer surface for engaging with the spigot receptacle.

The spigot receptacle may have a recess for receiving the conical outer surface of the spigot. The recess may be a cylindrical bore, or may have a conical internal surface with a greater cone angle to that of the spigot, so as to accommodate angular adjustment of the second aircraft structural component with respect to the first aircraft structural component during joining.

The spigot receptacle may be a component situated in an aperture in the respective aircraft structural component, or may be integrally formed with that respective aircraft structural component.

The double eccentric bush may have a flange and may be located in an aperture in the respective aircraft structural component with the flange against a surface of the respective aircraft structural component furthest from the spigot receptacle. The bush flange may sit flush with a surface of the respective aircraft structural component adjacent the aperture. The bush length (extending from the flange surface) may be equal to the aperture length.

The spigot receptacle may have a flange and may be located in an aperture in the respective aircraft structural component with the flange against a surface of the respective aircraft structural component furthest from the spigot.

The spigot may have a spigot through hole, and the spigot receptacle may have a spigot receptacle through hole, wherein the fastener extends through the spigot through hole and the spigot receptacle through hole.

The fastener may be a threaded fastener, and the joint assembly may further comprise a nut or thread on the spigot receptacle for receiving the threaded fastener.

The threaded fastener may have a head adjacent the double eccentric bush, optionally further comprising a washer between the head and the double eccentric bush.

Tightening the threaded fastener may apply a tension in the fastener reacted by the spigot engagement with the spigot receptacle. Furthermore, by arranging the bush flange and the spigot receptacle flange to bear against opposite surfaces of the first and second aircraft structural components, these flanges can react loads tending to separate the first and second aircraft structural components.

The joint assembly may further comprise one or more butt straps secured to the first and second aircraft structural components by the fasteners for joining the first and second aircraft structural components together when the spigot is received in the spigot receptacle. Each butt strap may extend between the first and second aircraft structural components. A fastener may be used to join one end of the butt strap to the first aircraft structural component, and another fastener may be used to join the other end of the butt strap to the second aircraft structural component. The butt straps can react loads tending to separate the first and second aircraft structural components.

The joint assembly may further comprise a shim between the spigot and the respective aircraft structural component for adjustment of the relative position of the first and second aircraft structural components in the direction along the longitudinal axis of the spigot. The shim may be placed between the respective aircraft structural component and the spigot flange.

A further aspect of the invention provides a first aircraft structural component and a second aircraft structural component joined by the joint assembly.

Preferably, the first aircraft structural component is joined to the second aircraft structural component by a plurality of the joint assemblies.

A further aspect of the invention provides an aircraft including the aircraft structure.

A yet further aspect of the invention provides a method of joining a first aircraft structural component to a second aircraft structural component, the method comprising: mounting a double eccentric bush to one of the first and second aircraft structural components; providing a spigot on the double eccentric bush; providing a spigot receptacle on the other of the first and second aircraft structural components; rotating elements of the double eccentric bush to adjust the spigot position relative to the respective aircraft structural component in up to two orthogonal directions normal to a longitudinal axis of the spigot; bringing the first and second aircraft structural components together so that the spigot is received in the spigot receptacle; and fastening the first and second aircraft structural components together when the spigot is received in the spigot receptacle, and locking the rotating elements of the double eccentric bush to prevent further rotation.

### BRIEF DESCRIPTION OF THE DRAWINGS

Embodiments of the invention will now be described with reference to the accompanying drawings, in which:
Figure 1 is a schematic plan view of an aircraft;
Figure 2 is a schematic side view of an aircraft wing having a fixed wing part, and adjustable leading and trailing edge parts for joining to the fixed wing part;
Figure 3 is a schematic side view of a leading edge assembly of the wing;
Figure 4 is a schematic side view of a joint assembly for joining the leading edge assembly in a partially assembled state;
Figure 5 is a schematic front view of a double eccentric bush installed in an adjustable part;
Figure 6 is a schematic side view of the joint assembly in a second partially assembled state;
Figure 7 is a schematic side view of the joint assembly in an assembled state;
Figure 7a is a detail view of a washer under the fastener head;
Figures 8 a), b) and c) show variations of the double eccentric bush; and
Figure 9 shows a schematic side view of another joint assembly having butt straps.

### DETAILED DESCRIPTION OF EMBODIMENT(S)

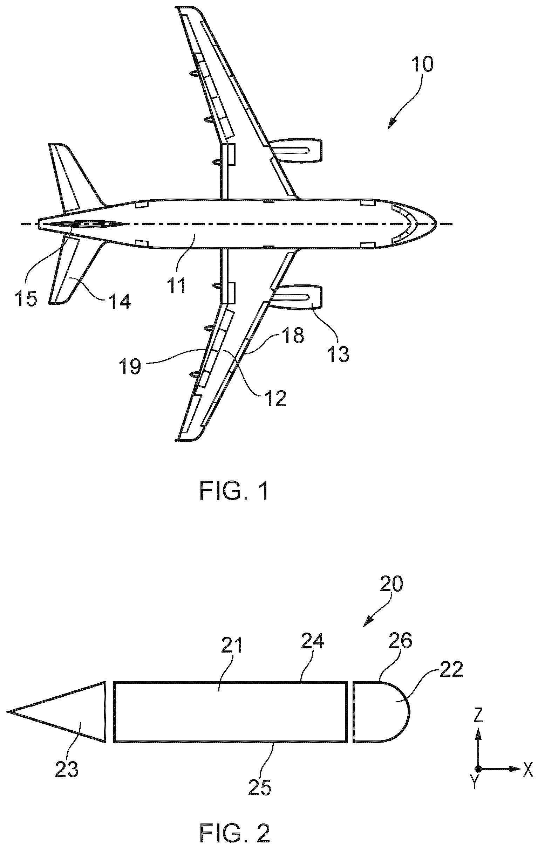

Figure 1 shows an aircraft 10. The aircraft 10 has a fuselage 11, and starboard and port fixed wings 12. An engine 13 is mounted to each wing 12. The aircraft also comprises an empennage (or tail assembly) which includes starboard and port horizontal stabilisers 14 and a vertical stabiliser 15.

In the embodiment illustrated in Figure 1, the aircraft 10 is a typical jet passenger transport aircraft but the invention is applicable to a wide variety of fixed wing aircraft types, including commercial, military, passenger, cargo, jet, propeller, general aviation, etc. with any number of engines attached to the wings or fuselage.

A schematic view of a wing structure 20 of the starboard wing 12 is shown in Figure 2. The port wing is similar in construction and so only a description of the starboard wing is provided herein.

The wing 12 has a cantilevered structure with a length extending in a span-wise direction from a wing root to a wing tip, with the wing root being joined to the aircraft fuselage 11. The wing 12 has a leading edge 18 and a trailing edge 19 as shown in Figure 1. The leading edge 18 is at the forward end of the wing 12 and the trailing edge 19 is at the rearward end of the wing 12. The wing 12 comprises a fixed wing part 21 a leading edge part 22 and a trailing edge part 23.

The leading and trailing edge parts may comprise one or more control surfaces (e.g., slats, flaps, ailerons, etc.) for controlling movement of the aircraft 10 about its longitudinal and/or transverse axes.

As shown in Figure 2, the wing 12 has a chordwise or longitudinal axis (X) which extends from the leading edge 18 to the trailing edge 19, a spanwise axis (Y) which extends in the direction from wing root to wing tip, and a vertical or thickness-wise axis (Z) which extends in a direction perpendicular to the chordwise (Y) and spanwise (X) axes.

The fixed wing part 21 has upper and lower skins 24, 25 which define the outer aerodynamic surfaces of the wing structure 20. The leading-edge part 22 (sometimes referred to as a leading edge "D-nose") is provided as a modular assembly, that is, a unitary preassembled structural module and may be pre-equipped with systems and/or actuation elements for actuating one or more control surfaces of the aircraft 10, such as the slats (not shown). The leading-edge part 22 may comprise a skin 26 which is attached to a plurality of riblets (not shown in figure 2) which are disposed at regular intervals in a span-wise direction along the leading-edge part 22. It shall be appreciated that the skin 26 of the leading-edge part defines the outer aerodynamic surface of the leading-edge part 22. The leading-edge part 22 is joined to the forward end of the fixed wing part 21 such that the skin 26 sits substantially flush with the upper skin 24 of the fixed wing part 21 so as to form a smooth, aerodynamic surface along the suction side of the aircraft wing 12. The trailing-edge part 23 may have a similar modular assembly and is joined to the rearward, or trailing, end of the fixed wing part 21 with similar aerodynamic constraints.

The fixed wing part 21, the leading-edge part 22 and the trailing-edge part 23 may be formed of composite or metallic materials, familiar to those skilled in the art.

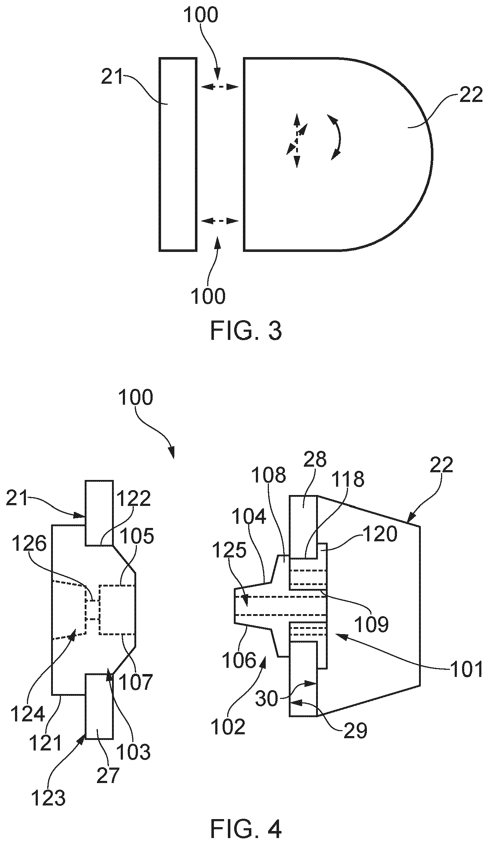

As shown in figure 3, the leading-edge part 22 is attached to the fixed wing part 21 at a plurality of attachments points. The leading-edge part 22 and the fixed wing part 21 are provided as an example of first and second aircraft structural components to be joined. The attachment points are provided by joint assemblies 100, which will be described in detail below. The attachment points provide a secure connection between a fixed part (e.g. the fixed wing part 21) and an adjustable part (e.g. the leading-edge part 22) while providing ready adjustment for controlling steps and gaps between the fixed part and the adjustable part during joining. The joint assembly 100 reacts loads and moments. Adjustment of the joint assembly 100 during joining may control vertical alignment to ensure any step (vertical, Z, height difference) between the upper aerodynamic surface of the fixed wing part 21 and the leading-edge part 22 is within tolerance. The joint assembly 100 may also control spanwise, Y, positional alignment of the leading-edge part 22 with respect to the fixed wing part 21 to within tolerance. The joint assembly may also control longitudinal, X, gap between the leading-edge part 22 and the fixed wing part 21 to within tolerance.

A respective one of the joint assemblies 100 shall now be described in further detail with reference to Figures 4 to 7. It shall be appreciated that the remaining joint assemblies are of a substantially identical construction and so, for the sake of conciseness, only one of said joints shall be described in detail.

As shown in figure 4, the joint assembly 100 may connect between a front spar 27 of the fixed wing part 21 and a riblet flange 28 of the leading-edge part 22. The joint assembly includes a double eccentric bush 101 for mounting to one of the first and second aircraft structural components. As illustrated, the double eccentric bush 101 is mounted to the adjustable part, i.e. the leading-edge part 22. A spigot 102 is mounted on the double eccentric bush 101. The joint assembly 100 further includes a spigot receptacle 103 for mounting to, or integrally formed with, the other of the first and second aircraft structural components. As illustrated, the spigot receptacle 103 is mounted to the fixed part, i.e. the fixed wing part 21. The spigot receptacle 103 is arranged to receive the spigot 102.

The double eccentric bush 101 has rotatable elements, described below. Rotating the rotatable elements of the double eccentric bush 101 enables adjustment of the spigot 102 relative to the leading-edge part 22 in two orthogonal directions normal to a longitudinal axis of the spigot (i.e. adjustment in Y and Z directions) prior to joining the fixed wing part 21 to the leading-edge part 22.

The spigot 102 has a spigot projection 104 for engaging with the spigot receptacle 103. The spigot projection has a longitudinal axis extending substantially in the X (chordwise) direction. The spigot projection 104 may have a conical outer surface 106. The spigot receptacle 103 has a recess 105 for receiving the spigot projection. The recess 105 may have a substantially cylindrical inner surface 107. The conical and cylindrical surfaces 106, 107 are configured to engage when the leading-edge part 22 is brought towards the fixed wing part 21.

The spigot 102 also has a spigot flange 108. The spigot flange 108 bears against the leading-edge part 22, e.g. against a surface 29 of the riblet flange 28 facing towards fixed wing part 21. The spigot projection 104 extends from one side of the spigot flange 108 towards the spigot receptacle 103.

The spigot 102 is mounted on the double eccentric bush 101. The spigot 102 may have a spigot root 109 received in an internal bore 110 of the double eccentric bush 101. The spigot root 109 may be a cylindrical extension extending from the spigot flange 108 on the opposite side thereof to the spigot projection 104.

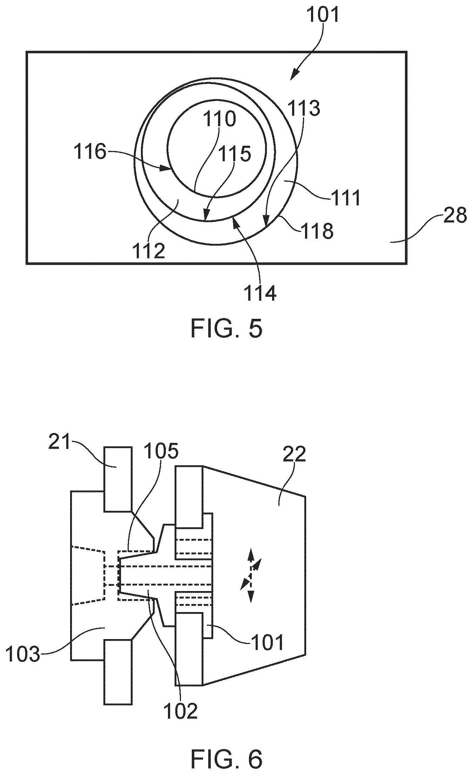

As best shown in figure 5, the double eccentric bush 101 has two rotatable elements. These two rotatable elements comprise a first eccentric bush part 111 and a second eccentric bush part 112. The first eccentric bush part 111 has a first outer diameter 113 and a first eccentric internal bore 114 relative to the first outer diameter 113. The second eccentric bush part 112 has a second outer diameter 115 and a second eccentric internal bore 116 relative to the second outer diameter 115. The second eccentric bush part 112 is rotatably received in the first eccentric bush part 111. The first eccentric bush part 111 is rotatably received in the leading-edge part 21, e.g. in an aperture 118 in the riblet flange 28.

The double eccentric bush 101 has a flange 120. The double eccentric bush flange 120 bears against a surface of the leading-edge part 21, e.g. against a surface 30 of the riblet flange 28 opposite the surface 29 and around the aperture 118. The first and second eccentric bush parts 111, 112 have a length extending from the flange 120 that is substantially equal to the length of the aperture 118 through the riblet flange 28. Therefore the spigot flange 108 may bear against first end surfaces of the first and second eccentric bush parts 111, 112. The spigot root 109 may have a length so that an end surface of the spigot root is substantially flush with the double eccentric bush flange 120.

The spigot receptacle 103 has a spigot receptacle flange 121. The spigot receptacle 103 is located in an aperture 122 in the fixed wing part 21, e.g. the front spar 27. The flange 121 bears against a surface 123 of front spar 27 furthest from the spigot 102. The spigot receptacle 103 may be mounted in the aperture 122 in the fixed wing part 21 prior to offering up the leading-edge part 22. Alternatively, as mentioned above, the spigot receptacle 103 may be integrally formed with the fixed wing part 21.

As shown in figure 6, the leading-edge part 22 may be offered up to the fixed wing part 21, having adjusted the double eccentric bush 101, so as to engage the spigot 102 with the spigot receptacle 103.

The joint assembly 100 further includes at least one fastener for joining the leading-edge part 22 and the fixed wing part 21 together when the spigot 102 is received in the spigot receptacle 103.

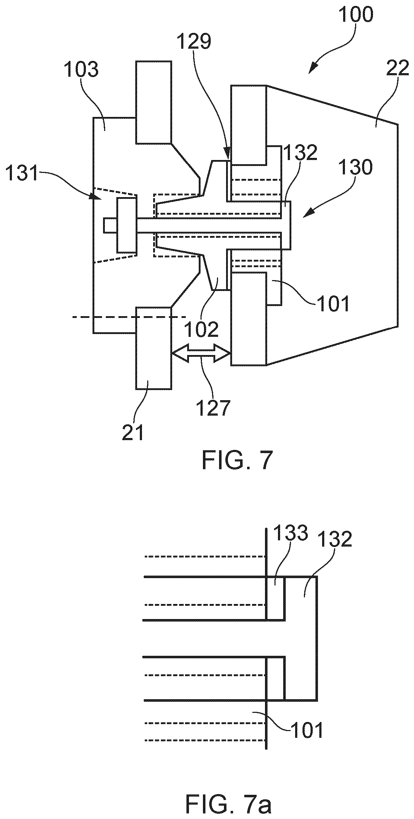

In the example shown in figure 4-7 the spigot 102 has a through bore 125 for receiving a fastener 130, best shown in figure 7. The fastener 130 is a threaded fastener. The spigot receptacle 103 may have an internal thread for threadably engaging the threaded fastener. Alternatively, as shown in figures 4-7, the spigot receptacle 103 may have a cavity 124, on an opposite side of the spigot receptacle 103 to the recess 105, providing a space for a threaded nut 131 for threadably engaging the threaded fastener. A bore 126, of reduced diameter compared to the recess 105 and the cavity 124, receives the threaded fastener 130 therethrough. The fastener 130 has a fastener head 132, the underside of which bears against the end of the spigot root 109 and/or the double eccentric bush 101, and the nut 131 bears against the base of the cavity 124 when the threaded fastener 130 is tightened.

Tightening the threaded fastener 130 causes clamping of the spigot projection 104 engaged with the spigot receptacle recess 105. A washer 133 may be provided between the head 132 and the double eccentric bush 101 as shown in figure 7a.

It is important that the adjustment of the double eccentric bush 101 is only enabled prior to tightening the threaded fastener 130.The double eccentric bush 101 may take a variety of forms.

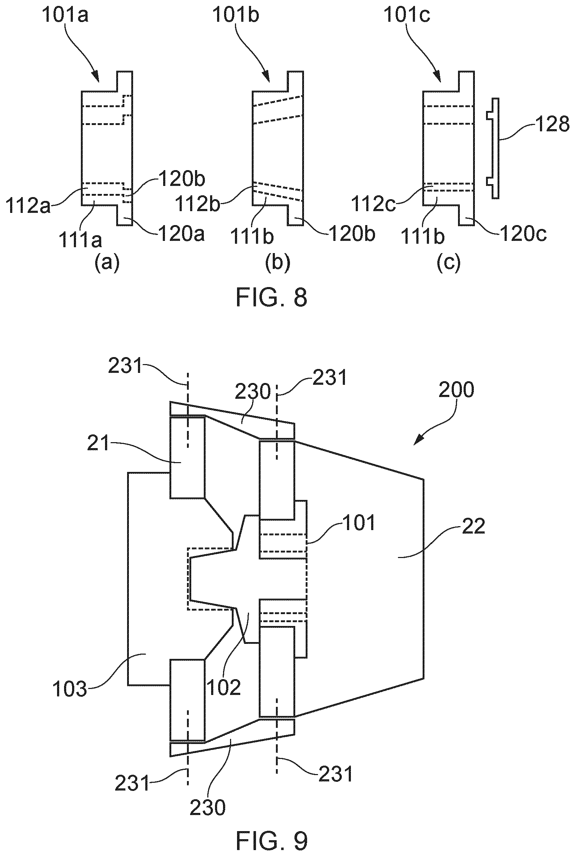

In a first example shown in figure 8a) the double eccentric bush 101a provides the first and second eccentric bush parts 111a, 112a having nested flanges 120a, 120b. Tightening the threaded fastener 130 causes frictional engagement of the underside of flange 120a of first eccentric bush part 111a to engage with the surface 30 of the leading-edge part 22 preventing further rotation of the first eccentric bush part 111a in aperture 118, and also causes the underside of flange 120b of second eccentric bush part 112a to engage with an interior surface of flange 120a preventing further rotation of the second eccentric bush part 112a with respect to the first eccentric bush part 111a. Therefore tightening the fastener 130 locks the adjusted position of the double eccentric bush 101a ensuring correct alignment of the spigot 102 in spigot receptacle 103.

In a second example shown in figure 8b) the double eccentric bush 101b provides the first and second eccentric bush parts 111b, 112b having conical interfacing surfaces. The outer diameter of the first eccentric bush part 111b is cylindrical. The outer diameter of the second eccentric bush 112b part is conical. Tightening the threaded fastener 130 causes frictional engagement between the underside of flange 120b of first eccentric bush part 111b to engage with the surface 30 of the leading-edge part 22 preventing further rotation of the first eccentric bush part 111b in aperture 118, and also causes the conical inner surface of the first eccentric bush part 111b to frictionally engage with the conical outer surface of the second eccentric bush 112b preventing further rotation of the second eccentric bush part 112b with respect to the first eccentric bush part 111b. Therefore tightening the fastener 130 locks the adjusted position of the double eccentric bush 101b ensuring correct alignment of the spigot 102 in spigot receptacle 103.

In a third example shown in figure 8c) the double eccentric bush 101c provides the first and second eccentric bush parts 111c, 112c parts secured to prevent relative rotation by a locking washer 128. Tightening the threaded fastener 130 causes frictional engagement between the underside of flange 120c of first eccentric bush part 111c to engage with the surface 30 of the leading-edge part 22 preventing further rotation of the first eccentric bush part 111c in aperture 118 and by virtue of the locking washer 128 therefore also prevents further rotation of the first eccentric bush part 112c. Therefore tightening the fastener 130 locks the adjusted position of the double eccentric bush 101b ensuring correct alignment of the spigot 102 in spigot receptacle 103.

Any of the first to third examples of the double eccentric bush 101a, 101b, 101c may be used in the example of the joint assembly 100 shown in figures 4-7.

Returning to figure 7, the joint assembly 100 may further comprise a shim 129 between the spigot 102 and the leading-edge part 21 for adjustment of the relative position of the gap 127 between the leading-edge part 22 and the fixed wing part in the X direction. Selecting a shim 129 from a plurality of shims of different thickness enables this adjustment.

In an alternative example, shown in figure 9, the joint assembly 200 has a no threaded fastener 130 and therefore no through hole 125 in the spigot 102, and no bore 126 or cavity 124 in the spigot receptacle 103. All other parts of the joint assembly 200 shown in figure 9 are as described above with reference to the joint assembly 100 of figures 4 to 7.

Instead of the threaded fastener 130, the joint assembly 200 has a plurality of fasteners formed as butt straps 230. The butt straps 230 are secured to the fixed wing part 21 and to the leading-edge part 22 by fasteners 231 for joining the fixed wing part 21 and the leading-edge part 22 together when the spigot 102 is received in the spigot receptacle 103. Each butt strap 230 may extend between the fixed wing part 21 and the leading-edge part 22. A fastener 231 is used to join one end of the butt strap 230 to the fixed wing part 21, and another fastener 231 is used to join the other end of the butt strap 230 to the leading-edge part 22. The butt straps 230 can react loads tending to separate the fixed wing part 21 and the leading-edge part 22 and to react any moment from the leading-edge part 22. The butt straps may be relatively flexible to absorb tolerances, especially on the lower aerodynamic surface of the wing. There may be no need for a shim, such as shim 129 of the joint assembly 100, on the spigot 102 as the butt straps 230 may absorb any tolerance in the gap 127 between the fixed and adjustable parts (the fixed wing part 21 and the leading-edge part 22).

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A joint assembly for joining a first aircraft structural component to a second aircraft structural component, the joint assembly comprising:
a double eccentric bush for mounting to one of the first and second aircraft structural components;
a spigot mounted on the double eccentric bush, wherein rotating elements of the double eccentric bush enable adjustment of the spigot relative to the respective aircraft structural component in two orthogonal directions normal to a longitudinal axis of the spigot prior to joining the first aircraft structural component to the second aircraft structural component;
a spigot receptacle for mounting to, or integrally formed with, the other of the first and second aircraft structural components, wherein the spigot receptacle is arranged to receive the spigot; and
at least one fastener for joining the first and second aircraft structural components together when the spigot is received in the spigot receptacle.

2. A joint assembly according to claim 1, wherein the spigot has a flange for bearing against the respective aircraft structural component, and a spigot projection extending from one side of the flange for engaging with the spigot receptacle.

3. A joint assembly according to claim 2, wherein the spigot further has a spigot root extending from the other side of the flange and received in the double eccentric bush.

4. A joint assembly according to claim 3, wherein the spigot root is received in an internal bore of the double eccentric bush.

5. A joint assembly according to any preceding claim, wherein the rotating elements of the double eccentric bush comprise a first eccentric bush part having a first outer diameter and a first eccentric internal bore relative to the first outer diameter, and a second eccentric bush part having a second outer diameter and a second eccentric internal bore relative to the second outer diameter, wherein the second eccentric bush part is rotatably received in the first eccentric bush part, and the first eccentric bush part is rotatably received in the respective aircraft structural component.

6. A joint assembly according to claim 5, wherein the first and second eccentric bush parts have nested flanges, or
wherein the first and second eccentric bush parts each have conical interfacing surfaces, or
wherein the first and second eccentric bush parts are secured to prevent relative rotation by a locking washer or other locking mechanism when the first and second aircraft structural components are joined by the fastener.

7. A joint assembly according to any preceding claim, wherein the spigot has a conical outer surface for engaging with the spigot receptacle,
preferably wherein the spigot receptacle has a recess for receiving the conical surface of the spigot.

8. A joint assembly according to any preceding claim, wherein the double eccentric bush has a flange and is located in an aperture in the respective aircraft structural component with the flange against a surface of the respective aircraft structural component furthest from the spigot receptacle.

9. A joint assembly according to any preceding claim, wherein the spigot receptacle has a flange and is located in an aperture in the respective aircraft structural component with the flange against a surface of the respective aircraft structural component furthest from the spigot.

10. A joint assembly according to any preceding claim, wherein the spigot has a spigot through hole, and the spigot receptacle has a spigot receptacle through hole, and wherein the fastener extends through the spigot through hole and the spigot receptacle through hole,
preferably wherein the fastener is a threaded fastener, and further comprising a nut or thread on the spigot receptacle for receiving the threaded fastener, and preferably wherein the threaded fastener has a head adjacent the double eccentric bush, optionally further comprising a washer between the head and the double eccentric bush.

11. A joint assembly according to any of claims 1 to 9, further comprising one or more butt straps secured to the first and second aircraft structural components by the fasteners for joining the first and second aircraft structural components together when the spigot is received in the spigot receptacle.

12. A joint assembly according to any preceding claim, further comprising a shim between the spigot and the respective aircraft structural component for adjustment of the relative position of the first and second aircraft structural components in the direction along the longitudinal axis of the spigot.

13. An aircraft structure including a first aircraft structural component joint to a second aircraft structural component by the joint assembly according to any preceding claim, preferably wherein the first and second aircraft structural components are aircraft wing components, preferably the first and second aircraft structural components are a fixed wing part and either a leading edge part or trailing edge wing part.

14. An aircraft including the aircraft structure of claim 13.

15. A method of joining a first aircraft structural component to a second aircraft structural component, the method comprising:
mounting a double eccentric bush to one of the first and second aircraft structural components;
providing a spigot on the double eccentric bush;
providing a spigot receptacle on the other of the first and second aircraft structural components;
rotating elements of the double eccentric bush to adjust the spigot position relative to the respective aircraft structural component in up to two orthogonal directions normal to a longitudinal axis of the spigot;
bringing the first and second aircraft structural components together so that the spigot is received in the spigot receptacle; and
fastening the first and second aircraft structural components together when the spigot is received in the spigot receptacle, and locking the rotating elements of the double eccentric bush to prevent further rotation.
